# EUROPEAN PATENT SPECIFICATION

(11) **EP 4 197 837 B1**
(45) Date of publication and mention of the grant of the patent: **25.03.2026**
(21) Application number: 21214285.5
(22) Date of filing: 14.12.2021
(51) Int. Cl.: B60J 7/043

(54) **ROOF SYSTEM AND METHOD OF OPERATING IT**
DACHSYSTEM UND VERFAHREN ZUM BETRIEB DAVON
SYSTÈME DE TOIT ET SON PROCÉDÉ DE FONCTIONNEMENT

(43) Date of publication of application: 21.06.2023
(73) Proprietor: Inalfa Roof Systems Group B.V., 5807 GW Oostrum (NL)
(72) Inventor: Schrans, Wilhelm Maria Theresia Hendricus, 5951 DJ Belfeld (NL)
(74) Representative: De Vries & Metman

(56) References cited:
- EP-A1- 3 647 094
- WO-A1-2020/144122
- US-A1- 2020 164 729

## Description

The invention relates to a roof system for a vehicle according to the preamble of claim 1.

Such roof system is known. From practice use, it is known that in the event of a collision, especially from the side of the vehicle, the panel front supports may become released from the guide rails due to a low holding force, so that the panel may be separated from the vehicle which can lead to dangerous situations.

WO 2020/144122 A1 discloses a roof system having a securing assembly that is paired with a support strip and can be moved, on the basis of the displacement of the drive slide, between a securing position, in which the support strip is secured to the drive slide in a form-fitting manner at least in the vertical direction by means of the securing assembly, and a release position, in which the securing form-fitting connection is released.

Document US2020164729A1 discloses a roof system similar to the roof system of the method claim.

It is one of the objects of the present invention to prevent or at least reduce the disadvantage of the prior art.

To obtain these and other objects, the invention proposes a roof system characterized by the feature of the characterizing portion of claim 1**.**

It is noted that the prior art includes further examples of projections positioned above a surface of the panel front support, see e.g., EP 1 844 967 A1 and EP 2 455 247 A1. However, in these prior art roof systems, the projection is formed on a control slide or an extension of a control slide. According to the invention, the projection is formed at the front on the cable slide which is directly attached to the cable and is therefore very securely held in the stationary guide, so that a very high retaining force can be obtained without additional parts.

Preferably, the projection of the cable slide is reinforced by a reinforcement. For example, the cable slide is made from plastic at least partly enveloping the reinforcement which extends into the reinforced projection. The reinforcement may for example be a steel insert, which is relatively cheap but can be reliable and strong because it offers many possibilities to be shaped in a favourable manner.

In such embodiment, the reinforcement preferably has a downward extension extending below the drive cable, it particularly extends around a substantial part of the circumference of the drive cable within a cable guide to obtain a very high retaining force.

To further enhance the retaining force, the reinforcement extends into a sidewardly projecting cam engaged with another part of the operating mechanism, for example into a slide pad engaged with one of the guide grooves.

The surface of the panel front support may be arranged at an angle with a substantial horizontal component, for example maximally 30 degrees with respect to the horizontal direction, and the surface is preferably substantially horizontal.

The invention also includes a method of operating the roof system for a vehicle described, which method is defined in claim 13.

Further details and advantages of the invention are described below with reference to the drawings showing an exemplary embodiment of the invention.
Fig. 1 is a simplified perspective view of a vehicle roof comprising the roof system according to the invention.
Fig. 2a and 2b are enlarged perspective views of the operating mechanism on one side of the panel of the roof system of Fig. 1 with ((Fig. 2a) and without (Fig. 2b) the respective guide rail.
Fig. 3 is an enlarged exploded view of a part of the operating mechanism of Fig. 2a when turned 90 degrees.
Fig. 4 is an enlarged plan view of a front portion of the operating mechanism of Fig. 3.
Fig. 5a is a side view of the operating mechanism of Fig. 2b.
Fig. 5b is a sectional view along the line Vb in Fig. 4, thus showing a section through the operating mechanism of Fig. 2b.
Fig. 6 is a view corresponding to that of Fig. 5a but in a different position of the cable slide of the operating mechanism.
Fig. 7a is an enlarged view of the cable slide of the operating mechanism as viewed along the arrow VIIa in Fig. 3.
Fig. 7b is a view corresponding to that of Fig. 7a but only showing the steel insert of the cable slide.
Fig. 7c shows the cable slide of Fig. 7a along arrow VIIc therein.
Figs. 8a, 8b, 8c and 8d are sectional views along the lines VIIIa, VIIIb, VIIIc and VIIId in Fig. 4.

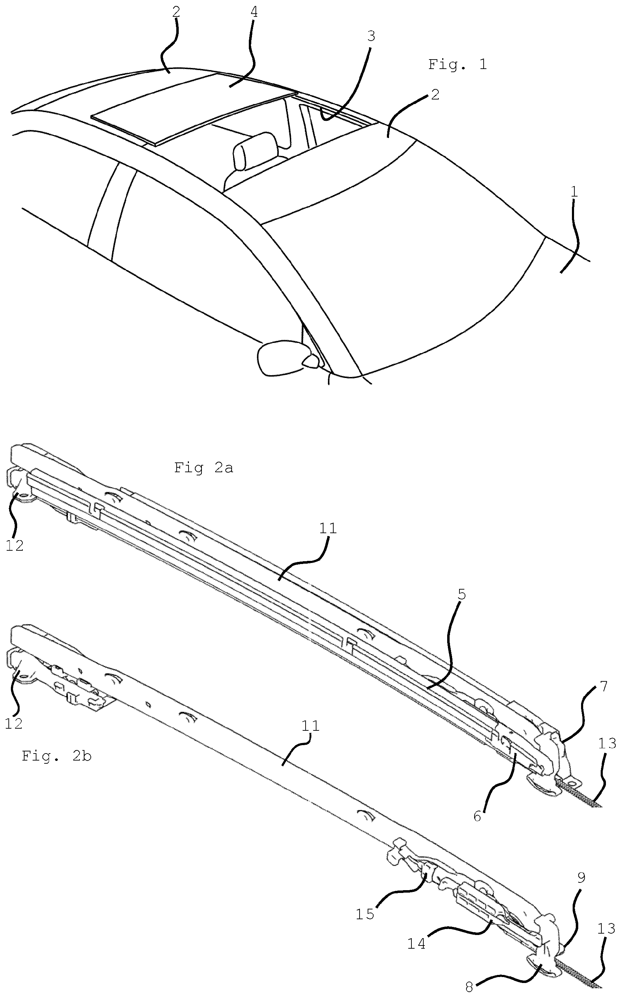

Firstly, referring to Fig. 1, a roof system is schematically illustrated. In a fixed roof 2 of a vehicle 1 a roof opening 3 is defined which can be closed (not shown) and opened (Fig. 1) by a movable closure, here a rigid, at least partly (semi)transparent panel 4, made of glass, plastic or the like. The roof assembly may include a second panel which is generally a fixed panel but may also be movable as well.

The roof system shown here is a so-called spoiler roof in which the panel is movable from its closed position upwardly (at least with its rear side) and then rearwardly to positions above the fixed roof, or in this case above the fixed roof portion behind roof opening 3. The operating mechanism, in particular the supports for panel 4, remains mainly within the roof opening, contrary to a top slider in which rear supports of the panel slide in guide rails that extend or are extended to positions behind roof opening 3.

The operating system may for example operate substantially as is shown and described in EP 2 263 896 B1.

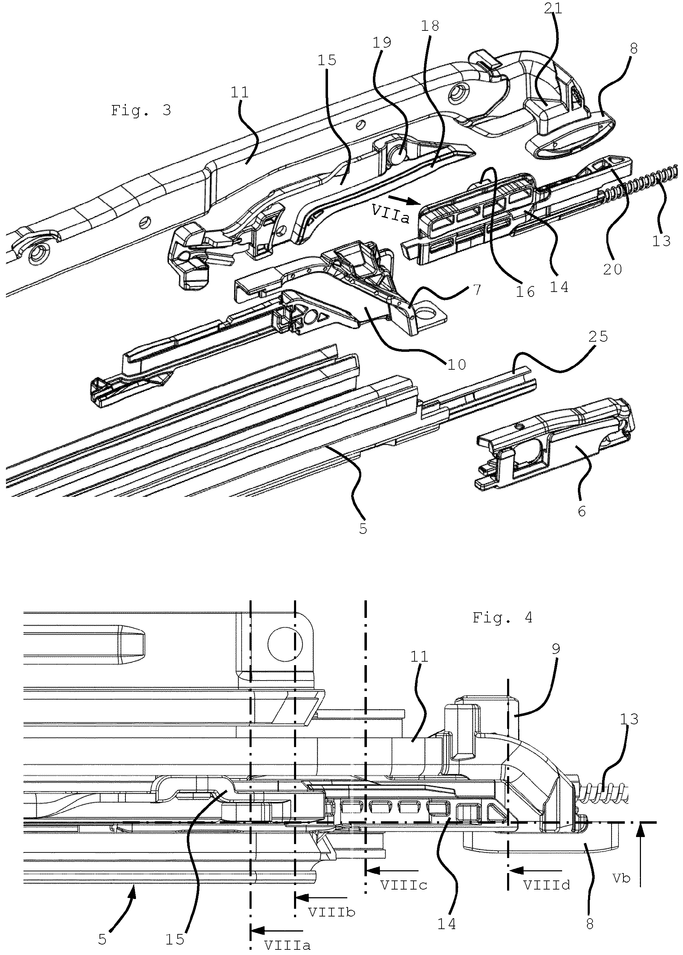

Fig. 2 and 3 show components of the operating mechanism which are relevant for the present invention. The operating mechanism on one side of the roof system is shown and it should be kept in mind that the same operating mechanism is present on the other side of the roof system, albeit in mirror image.

These figures show a guide rail 5 extending in longitudinal direction of the vehicle and roof system along one of the left and right sides of the roof opening. These guide rails 5 are part of or are attached to a frame (only a small part of it is shown in the roof opening 3 in Fig. 1) forming the stationary part of the roof system and being used to attach the roof system to the fixed roof 2 of the vehicle 1 on one hand and to support all parts of the roof system on the other hand.

The guide rails 5 comprise a number of guide grooves to guide different parts or portions of the operating mechanism, and some of them will be described later. The guide grooves in the guide rail are straight, i.e., follow the respective guide rail 5 which can be straight or slightly curved to follow the curvature of fixed roof 2. At the front side of each guide rail there are provided plastic front locators 6 and 7 which are used to force slide shoes 8 and 9 at the front of panel 4 into a downward movement when panel 4 moves to its forward position. It is shown in Fig. 3 that front locator 7 comprises a downwardly and forwardly inclined slot 10 to guide front slide shoe 9. The other front slide shoe 8 comes out of locator 6 in the forward position of panel 4 as is shown in Fig. 2a.

Front slide shoes 8 and 9 form the panel front support and are positioned at the front end of a mechanism bracket 11 which is either attached to panel 4 (through a panel bracket) or slidably engaged with panel 4 (through a panel guide rail) to allow an extended rearward sliding movement of panel 4 when mechanism bracket 11 has reached its rearward position. At its rear end, mechanism bracket 11 is supported by an adjustable rear support 12 which is configured to adjust the vertical position of the rear side of panel 4 in order to move the rear side of panel 4 from the closed position within roof opening 3 to an open position raised above fixed roof 2 to enable panel 4 to slide rearwardly above fixed roof 2.

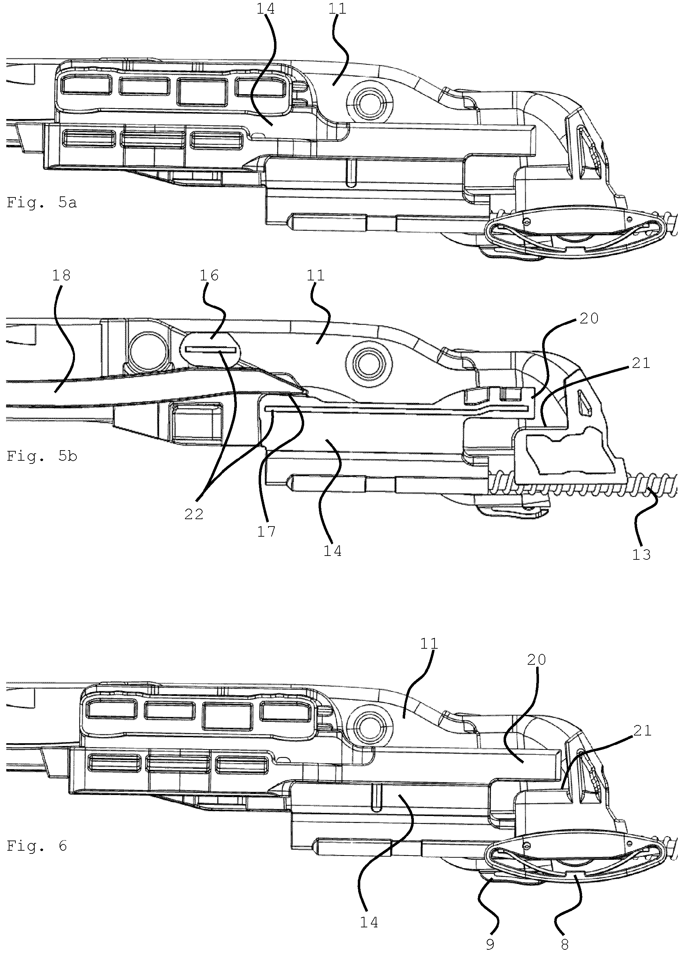

The operating mechanism is controlled by means of an electric motor (not shown) which drives the operating mechanism through drive cables 13 guided by a cable guide and attached on one of its ends to a cable slide 14 guided by guide rail 5. Cable slide 14 is connected to a driven slider 15 through a pair of cams 16, 17(Fig. 5b) on cable slide 14 engaging a control curve 18 on driven slider 15. This control curve determines whether cable slide 14 is allowed to slide with respect to driven slider 15 (horizontal portion of control curve 18) or is locked with respect to driven slider 15 (downward portion of control curve 18). When cable slide 14 is sliding with respect to driven slider 15, cable slide actuates rear support 12 (connection not shown) in order to rotate panel 4 and when cable slide 14 is locked to driven slider 15 cable slide 14 drives panel 4 primarily in a sliding motion. Driven slider 15 is rotatably connected to mechanism bracket 11 by means of pivot 19.

The operating mechanism is mainly known from the prior art. The invention deals with cable slide 14 and its cooperation with guide rail 5, mechanism bracket 11 and drive cable 13.

Cable slide 14 of this application is provided with a forward projection 20 which is designed to be positioned above a substantially horizontal surface 21 which is formed on mechanism bracket 11. This horizontal surface 21 is arranged substantially between and above front slide shoes 8 and 9. The purpose of projection is to provide upward support to mechanism bracket 11 and its front slide shoes 8, 9 during a collision, especially a collision from the side (tested in an oblique or lateral side pole impact test) with panel 4 in its closed position in which cable slide is moved into its forward position with respect to mechanism bracket 11. In the closed position of panel 4, front slide shoes 8, 9 are moved out of guide rail 5 and out of locator 6 (slide shoe 8) and within locator 7 (slide shoe 9) which, however, can easily break off from guide rail 5, so that these front slide shoes 8, 9 do not offer a high upward retaining force in the case of a collision. Cable slide 14 is designed to offer a high upward retaining force.

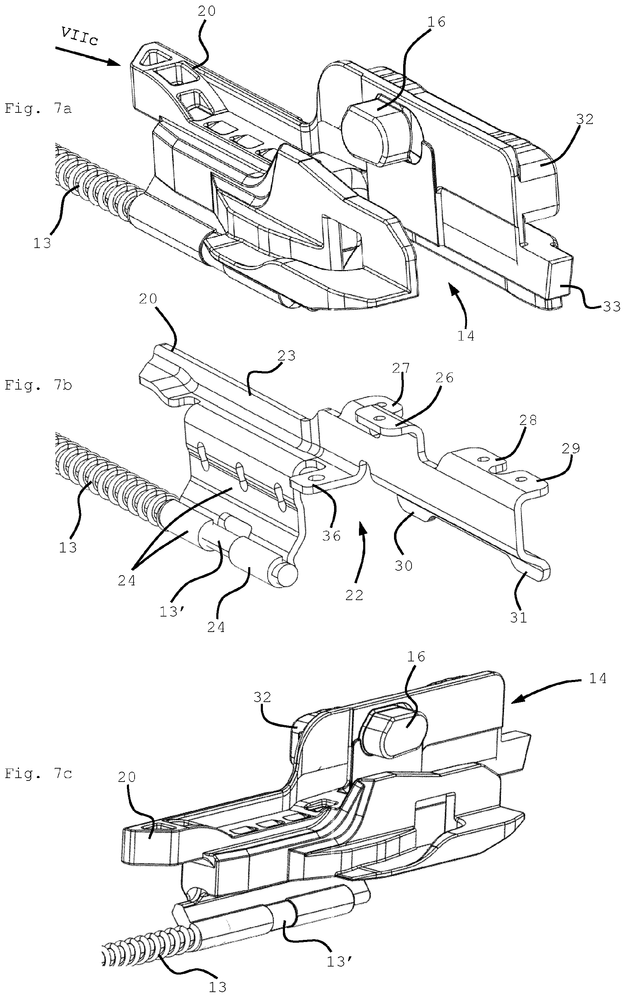

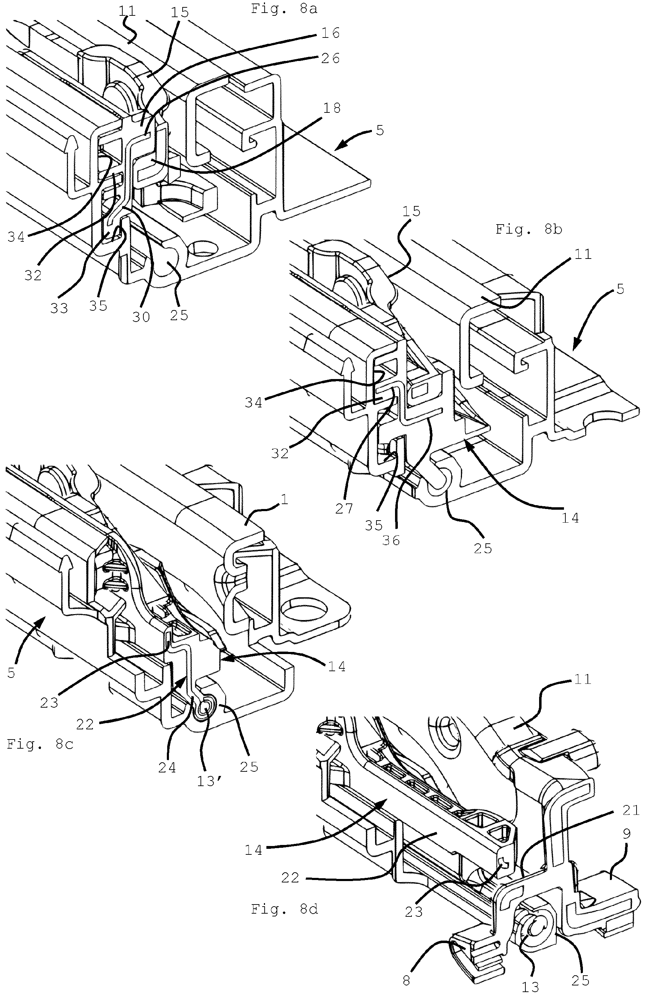

Figs. 5, 6 and 7 show cable slide 14 in more detail. First of all, Fig. 7b illustrates cable slide 14 with all plastic removed in order to show its insert 22 formed from sheet metal, in particular steel. A comparison of Figs. 7a, b and c makes clear that insert 22 extends into the major portion of projection 20 (see also Figs. 5b and 8d) making this projection very strong, also due to the shape of insert 22 with a vertical wall part 23. Fig. 7b further illustrates that insert 22 has a downward extension 24 extending around substantially the whole circumference of an end part 13' of drive cable 13. This end part 13' has a slightly reduced diameter so that end part 13' and surrounding extension 24 of insert 22 fit into a cable guide 25 of guide rail 5 (see Fig. 8c) thereby upwardly retaining cable slide 14 very well.

Fig. 7b further shows a plurality of lateral projections formed by folding the vertical sheet metal 90 degrees. Projection 26 reinforces cam 16 (see Fig. 8a) extending above control curve 18 in the closed position of panel 4, thus preventing cam 16 from braking off when mechanism bracket 11 and thereby driven slider 15 are forced in upward direction by panel 4. Horizontal projections 27, 28 and 29 and inclined projections 30, 31 extend into slide pads 32 and 33 (see Fig. 8a and 8b) engaging guide grooves 34 and 35 in guide rail 5 thereby also increasing the upward retaining force. Projection 36 provides an inner reinforcement to cam 17 of cable slide 14 (see Fig. 8b).

Fig. 8d shows again how horizontal surface 21 is positioned between front slide shoes 8 and 9 and substantially above cable guide 25 in guide rail. The sections of Fig. 8 show that also mechanism bracket 11 and driven slider 15 comprise metal inserts to reinforce these parts.

Figs. 5a and 6 illustrate another feature of this embodiment of the roof system. Upon a comparison of these figures one can see that in the position of Fig. 6, cable slide 14 is moved a distance forwardly with respect to the position of fig. 5a which is the normal closed position of panel 4. Fig. 6 illustrates the initialisation position of the operating mechanism. This position is used to initialise the software of the control system, i.e., a zero position from which all positions of the operating system are calculated. A pre-crash sensor is used to determine a certain impact situation and, if needed, the electric motor is actuated to move the cable slide 14 to the initialisation position in order to create additional overlap between projection 20 of cable slide 14 and horizontal surface 21 of mechanism bracket to further improve the retaining force of panel 4 in the event of a crash of the vehicle 1.

From the above it follows that the invention provides a roof system which offers a very high retaining force for the front support of the panel thereby preventing the panel from being released from the vehicle in the event of a collision.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Roof system for a vehicle (1) having a roof opening (3) in its fixed roof (2), comprising a stationary part configured to be attached to the fixed roof, a panel (4) movably supported on the stationary part and configured to close the roof opening (3) in its closed position and to be moved at least rearwardly to an opened position in which the roof opening (3) is at least partly opened, the stationary part including guide rails (5) extending in longitudinal direction substantially parallel to opposite sides of the roof opening (3), said guide rails (5) slidably supporting an operating mechanism for the panel (4) and including guide grooves (34, 35), the operating mechanism in each guide rail including a drive cable (13), a cable slide (14) directly attached to the drive cable, a panel front support (8, 9, 11) and a panel rear support (12) movable by means of the cable slide, said panel front support being provided with at least one slide shoe (8, 9) which is slidably guided in one of the guide grooves in the guide rail during sliding movements of the panel, but which is positioned in a locator (6, 7) in front of the guide rail (5) when the panel is in its normal closed position, wherein the cable slide (14) is provided with a reinforced projection (20) which is positioned above a surface (21) of the panel front support (8, 9, 11) with an overlap in the normal closed position of the panel (4), wherein said projection (20) extends in forward direction at the front of the cable slide (14), **characterized in that** the cable slide (14) in the normal closed position is movable in forward direction to an initialisation position forward of the position of the cable slide (14) in the normal closed position wherein the projection (20) is positioned above the surface (21) with an additional overlap.

2. The roof system of claim 1, wherein the projection (20) of the cable slide (14) is reinforced by a reinforcement.

3. The roof system of claim 2, wherein the cable slide (14) is made from plastic at least partly enveloping the reinforcement (22) which extends into the reinforced projection (20).

4. The roof system of claim 3, wherein the reinforcement (22) has a downward extension extending below the drive cable (13).

5. The roof system of claim 4, wherein the downward extension (24) of the reinforcement (22) extends around a substantial part of the circumference of the drive cable (13) within a cable guide (25) of the guide rail (5).

6. The roof system of claim 3, wherein the reinforcement (22) extends into a sidewardly projecting cam (16) engaged with another part of the operating mechanism.

7. The roof system of claim 3, wherein the reinforcement (22) extends into a slide pad (32, 33) engaged with one of the guide grooves (34, 35).

8. The roof system of claim 2, wherein the reinforcement (22) is an insert surrounded substantially completely by moulded plastic.

9. The roof system of claim 8, wherein the insert is made from steel.

10. The roof system of any of claims 1 - 9, wherein the surface (21) of the panel front support (8, 9, 11) is arranged at an angle with a substantial horizontal component.

11. The roof system of claim 10, wherein the angle of the surface (21) is maximally 30 degrees with respect to the horizontal direction.

12. The roof system of claim 11, wherein the surface (21) of the panel front support (8, 9, 11) is substantially horizontal.

13. Method of operating a roof system for a vehicle (1) having a roof opening (3) in its fixed roof (2), comprising a stationary part configured to be attached to the fixed roof (2), a panel (4) movably supported on the stationary part and configured to close the roof opening (3) in its normal closed position and to be moved at least rearwardly to an opened position in which the roof opening is at least partly opened, the stationary part including guide rails (5) extending in longitudinal direction substantially parallel to opposite sides of the roof opening, said guide rails slidably supporting an operating mechanism for the panel (4) and including guide grooves (34, 35) bordered by guide flanges, the operating mechanism in each guide rail including a drive cable (13), a cable slide (14), a panel front support (8, 9, 11) and a panel rear support (12) movable by means of the cable slide (14), said panel front support being provided with at least one slide shoe (8, 9) which is slidably guided in one of the guide grooves (34, 35) in the guide rail during sliding movements of the panel, but which is positioned in a locator (6, 7) in front of the guide rail when the panel is in its normal closed position, wherein the cable slide (14) is provided with a projection (20) which is positioned above a surface (21) of the panel front support (8, 9, 11) in the normal closed position of the panel to create an overlap between the cable slide (14) and the surface (21) of the panel front support, the method including the step of sensing an upcoming collision of the vehicle and subsequently moving the cable slide (14), in the normal closed position of the panel, in forward direction to create an additional overlap with the surface (21) of the panel front support, and wherein a motor for the drive cable (13) is actuated if an upcoming side-impact collision is sensed, preferably such that the cable slide (14) is moved to an initialisation position forward of the position of the cable slide in the normal closed position.

## Patentansprüche

1. Dachsystem für ein Fahrzeug (1), das eine Dachöffnung (3) in seinem feststehenden Dach (2) aufweist, aufweisend: einen stationären Teil, der zu einer Anbringung an dem feststehenden Dach ausgebildet ist, ein Paneel (4), das bewegbar an dem stationären Teil getragen und dazu eingerichtet ist, die Dachöffnung (3) in seiner Geschlossen-Position zu schließen und wenigstens rückwärts in eine Offen-Position bewegt zu werden, in welcher die Dachöffnung (3) wenigstens teilweise geöffnet ist, wobei der stationäre Teil Führungsschienen (5) aufweist, die sich in einer Längsrichtung erstrecken, die im Wesentlichen parallel zu gegenüberliegenden Seiten der Dachöffnung (3) ist, wobei die Führungsschienen (5) einen Betätigungsmechanismus für das Paneel (4) verschiebbar trägt und Führungsnuten (34, 35) aufweist, wobei der Betätigungsmechanismus in jeder Führungsschiene aufweist: ein Antriebskabel (13), einen Kabelschlitten (14), der direkt an dem Antriebskabel angebracht ist, einen Paneelvorderseitenträger (8, 9, 11) und einen Paneelhinterseitenträger (12), die mittels des Kabelschlittens bewegbar sind, wobei der Paneelvorderseitenträger mit wenigstens einem Verschiebeschuh (8, 9) bereitgestellt ist, der in einer der beiden Führungsnuten in der Führungsschiene während Verschiebebewegungen des Paneels verschiebbar geführt ist, aber welcher in einem Positionierer (6, 7) vor der Führungsschiene (5) angeordnet ist, wenn sich das Paneel in seiner normalen Geschlossen-Position befindet, wobei der Kabelschlitten (14) mit einem verstärkten Vorsprung (20) bereitgestellt ist, der oberhalb einer Fläche (21) des Paneelvorderseitenträgers (8, 9, 11) mit einem Überlapp in der normalen Geschlossen-Position des Paneels (4) angeordnet ist, wobei sich der Vorsprung (20) in einer Vorwärtsrichtung an der Vorderseite des Kabelschlittens (14) erstreckt, **dadurch gekennzeichnet, dass** der Kabelschlitten (14) in der normalen Geschlossen-Position in einer Vorwärtsrichtung bis zu einer Initialisierungsposition vor der Position des Kabelschlittens (14) in der normalen Geschlossen-Position bewegbar ist, wobei sich der Vorsprung (20) oberhalb der Fläche (21) mit einem zusätzlichen Überlapp befindet.

2. Das Dachsystem nach Anspruch 1, wobei der Vorsprung (20) des Kabelschlittens (14) durch eine Verstärkung verstärkt ist.

3. Das Dachsystem nach Anspruch 2, wobei der Kabelschlitten (14) aus einem Kunststoff gebildet ist, der zumindest teilweise die Verstärkung (22) umhüllt, die sich in den verstärkten Vorsprung (20) erstreckt.

4. Das Dachsystem nach Anspruch 3, wobei die Verstärkung (22) eine nach unten gerichtete Verlängerung aufweist, die sich unterhalb des Antriebskabels (13) erstreckt.

5. Das Dachsystem nach Anspruch 4, wobei sich die nach unten gerichtete Verlängerung (24) der Verstärkung (22) um einen wesentlichen Teil des Umfangs des Antriebskabels (13) innerhalb einer Kabelführung (25) der Führungsschiene (5) erstreckt.

6. Das Dachsystem nach Anspruch 3, wobei sich die Verstärkung (22) in einen seitlich vorstehenden Nocken (16) erstreckt, der mit einem anderen Teil des Betätigungsmechanismus in Eingriff steht.

7. Das Dachsystem nach Anspruch 3, wobei sich die Verstärkung (22) in ein Verschiebepad (32, 33) erstreckt, das mit einer der Führungsnuten (34, 35) in Eingriff steht.

8. Das Dachsystem nach Anspruch 2, wobei die Verstärkung (22) ein Einsatz ist, der im Wesentlichen vollständig von geformtem Kunststoff umgeben ist.

9. Das Dachsystem nach Anspruch 8, wobei der Einsatz aus Stahl gebildet ist.

10. Das Dachsystem nach einem der Ansprüche 1 bis 9, wobei die Fläche (21) des Paneelvorderseitenträgers (8, 9, 11) in einem Winkel mit einer im Wesentlichen horizontalen Komponente angeordnet ist.

11. Das Dachsystem nach Anspruch 10, wobei der Winkel der Fläche (21) maximal 30 Grad in Bezug auf die horizontale Richtung beträgt.

12. Das Dachsystem nach Anspruch 11, wobei die Fläche (21) des Paneelvorderseitenträgers (8, 9, 11) im Wesentlichen horizontal ist.

13. Verfahren zum Betreiben eines Dachsystems für ein Fahrzeug (1), das eine Dachöffnung (3) in seinem feststehenden Dach (2) aufweist, aufweisend: einen stationären Teil, der zu einer Anbringung an dem feststehenden Dach (2) ausgebildet ist, ein Paneel (4), das bewegbar an dem stationären Teil getragen und dazu eingerichtet ist, die Dachöffnung (3) in seiner normalen Geschlossen-Position zu schließen und wenigstens rückwärts in eine Offen-Position bewegt zu werden, in welcher die Dachöffnung wenigstens teilweise geöffnet ist, wobei der stationäre Teil Führungsschienen (5) aufweist, die sich in einer Längsrichtung erstrecken, die im Wesentlichen parallel zu gegenüberliegenden Seiten der Dachöffnung ist, wobei die Führungsschienen einen Betätigungsmechanismus für das Paneel (4) verschiebbar tragen und Führungsnuten (34, 35) aufweisen, die von Führungsflanschen begrenzt sind, wobei der Betätigungsmechanismus in jeder Führungsschiene aufweist: ein Antriebskabel (13), einen Kabelschlitten (14), einen Paneelvorderseitenträger (8, 9, 11) und einen Paneelhinterseitenträger (12), die mittels des Kabelschlittens bewegbar sind, wobei der Paneelvorderseitenträger mit wenigstens einem Verschiebeschuh (8, 9) bereitgestellt ist, der in einer der Führungsnuten (34, 35) in der Führungsschiene während Verschiebebewegungen des Paneels verschiebbar geführt ist, aber welcher in einem Positionierer (6, 7) vor der Führungsschiene angeordnet ist, wenn sich das Paneel in seiner normalen Geschlossen-Position befindet, wobei der Kabelschlitten (14) mit einem Vorsprung (20) bereitgestellt ist, der oberhalb einer Fläche (21) des Paneelvorderseitenträgers (8, 9, 11) in der normalen Geschlossen-Position des Paneels angeordnet ist, um einen Überlapp zwischen dem Kabelschlitten (14) und der Fläche (21) des Paneelvorderseitenträgers zu bilden, wobei das Verfahren aufweist: den Schritt eines Erfassens einer bevorstehenden Kollision des Fahrzeugs und eines anschließenden Bewegens des Kabelschlittens (14), in der normalen Geschlossen-Position des Paneels, in einer Vorwärtsrichtung, um einen zusätzlichen Überlapp mit der Fläche (21) des Paneelvorderseitenträgers zu erzeugen, und wobei ein Motor für das Antriebskabel (13) betätigt wird, wenn eine bevorstehende Seitenkollision erfasst wird, vorzugsweise so, dass der Kabelschlitten (14) in eine Initialisierungsposition vor der Position des Kabelschlittens in der normalen Geschlossen-Position bewegt wird.

## Revendications

1. Système de toit pour un véhicule (1) présentant une ouverture de toit (3) dans son toit fixe (2), comprenant une partie immobile configurée pour être attachée au toit fixe, un panneau (4) supporté de manière mobile sur la partie immobile et configuré pour fermer l'ouverture de toit (3) dans sa position fermée et pour être déplacé au moins vers l'arrière dans une position ouverte dans laquelle l'ouverture de toit (3) est au moins partiellement ouverte, la partie immobile comportant des rails de guidage (5) s'étendant dans la direction longitudinale sensiblement parallèlement aux côtés opposés de l'ouverture de toit (3), lesdits rails de guidage (5) supportant de manière coulissante un mécanisme d'actionnement pour le panneau (4) et comportant des rainures de guidage (34, 35), le mécanisme d'actionnement dans chaque rail de guidage comportant un câble d'entraînement (13), un coulisseau de câble (14) attaché directement au câble d'entraînement, un support avant de panneau (8, 9, 11) et un support arrière de panneau (12) mobiles au moyen du coulisseau de câble, ledit support avant de panneau étant pourvu d'au moins un patin coulissant (8, 9) qui est guidé de manière coulissante dans l'une des rainures de guidage dans le rail de guidage lors de mouvements de coulissement du panneau, mais qui est positionné dans un localisateur (6, 7) devant le rail de guidage (5) lorsque le panneau est dans sa position normale fermée, dans lequel le coulisseau de câble (14) est pourvu d'une saillie (20) renforcée qui est positionnée au-dessus d'une surface (21) du support avant de panneau (8, 9, 11) avec un chevauchement dans la position normale fermée du panneau (4), dans lequel ladite saillie (20) s'étend vers l'avant à l'avant du coulisseau de câble (14), **caractérisé en ce que** le coulisseau de câble (14) dans la position normale fermée est mobile vers l'avant vers une position d'initialisation à l'avant de la position du coulisseau de câble (14) dans la position normale fermée dans lequel la saillie (20) est positionnée au-dessus de la surface (21) avec un chevauchement supplémentaire.

2. Système de toit selon la revendication 1, dans lequel la saillie (20) du coulisseau de câble (14) est renforcée par un renfort.

3. Système de toit selon la revendication 2, dans lequel le coulisseau de câble (14) est réalisé en plastique enveloppant au moins partiellement le renfort (22) qui s'étend dans la saillie (20) renforcée.

4. Système de toit selon la revendication 3, dans lequel le renfort (22) présente une extension vers le bas s'étendant sous le câble d'entraînement (13).

5. Système de toit selon la revendication 4, dans lequel l'extension vers le bas (24) du renfort (22) s'étend autour d'une partie substantielle de la circonférence du câble d'entraînement (13) à l'intérieur d'un guide de câble (25) du rail de guidage (5).

6. Système de toit selon la revendication 3, dans lequel le renfort (22) s'étend dans une came (16) en saillie latérale en prise avec une autre partie du mécanisme d'actionnement.

7. Système de toit selon la revendication 3, dans lequel le renfort (22) s'étend dans un tampon coulissant (32, 33) en prise avec l'une des rainures de guidage (34, 35).

8. Système de toit selon la revendication 2, dans lequel le renfort (22) est un insert entouré sensiblement entièrement de plastique moulé.

9. Système de toit selon la revendication 8, dans lequel l'insert est en acier.

10. Système de toit selon l'une quelconque des revendications 1-9, dans lequel la surface (21) du support avant de panneau (8, 9, 11) est agencée à un angle avec une composante horizontale substantielle.

11. Système de toit selon la revendication 10, dans lequel l'angle de la surface (21) est de 30 degrés maximum par rapport à la direction horizontale.

12. Système de toit selon la revendication 11, dans lequel la surface (21) du support avant de panneau (8, 9, 11) est sensiblement horizontale.

13. Procédé d'actionnement d'un système de toit pour un véhicule (1) ayant une ouverture de toit (3) dans son toit fixe (2), comprenant une partie immobile configurée pour être attachée au toit fixe (2), un panneau (4) supporté de manière mobile sur la partie immobile et configuré pour fermer l'ouverture de toit (3) dans sa position normale fermée et pour être déplacé au moins vers l'arrière vers une position ouverte dans laquelle l'ouverture de toit est au moins partiellement ouverte, la partie immobile comportant des rails de guidage (5) s'étendant dans la direction longitudinale sensiblement parallèlement aux côtés opposés de l'ouverture de toit, lesdits rails de guidage supportant de manière coulissante un mécanisme d'actionnement pour le panneau (4) et comportant des rainures de guidage (34, 35) bordées par des brides de guidage, le mécanisme d'actionnement dans chaque rail de guidage comportant un câble d'entraînement (13), un coulisseau de câble (14), un support avant de panneau (8, 9, 11) et un support arrière de panneau (12) mobiles au moyen du coulisseau de câble (14), ledit support avant de panneau étant pourvu d'au moins un patin coulissant (8, 9) qui est guidé de manière coulissante dans l'une des rainures de guidage (34, 35) dans le rail de guidage lors de mouvements de coulissement du panneau, mais qui est positionné dans un localisateur (6, 7) devant le rail de guidage lorsque le panneau est dans sa position normale fermée, dans lequel le coulisseau de câble (14) est pourvu d'une saillie (20) qui est positionnée au-dessus d'une surface (21) du support avant de panneau (8, 9, 11) dans la position normale fermée du panneau pour créer un chevauchement entre le coulisseau de câble (14) et la surface (21) du support avant de panneau, le procédé comportant l'étape de détection d'une collision imminente du véhicule et de déplacement subséquent du coulisseau de câble (14), dans la position normale fermée du panneau, vers l'avant pour créer un chevauchement supplémentaire avec la surface (21) du support avant de panneau, et dans lequel un moteur pour le câble d'entraînement (13) est mis en marche si une collision latérale imminente est détectée, de préférence de sorte que le coulisseau de câble (14) est déplacé vers une position d'initialisation à l'avant de la position du coulisseau de câble dans la position normale fermée.
